# EUROPÄISCHE PATENTSCHRIFT

(11) **EP 4 153 006 B1**
(45) Veröffentlichungstag und Bekanntmachung des Hinweises auf die Patenterteilung: **03.04.2024**
(21) Anmeldenummer: 21725094.3
(22) Anmeldetag: 07.05.2021
(51) Int. Cl.: A46D 3/04, A46D 3/06, B29C 65/08

(54) **VERFAHREN ZUM HERSTELLEN EINER BÜRSTE**
METHOD FOR MANUFACTURING A BRUSH
PROCEDE DE FABRICATION D'UNE BROSSE

(30) Priorität: 20.05.2020 DE 102020113635
(43) Veröffentlichungstag der Anmeldung: 29.03.2023
(73) Patentinhaber: GB Boucherie NV, 8870 Izegem (BE)
(72) Erfinder: BOUCHERIE, Bart Gerard, 8870 Izegem (BE); DEPICKERE, Chris, 8870 Izegem (BE)
(74) Vertreter: Prinz & Partner mbB
(86) Internationale Anmeldenummer: PCT/EP2021/062161
(87) Internationale Veröffentlichungsnummer: WO 2021/233697

(56) Entgegenhaltungen:
- WO-A1-2017/167608
- DE-A1-102018 127 192

## Beschreibung

Die Erfindung betrifft ein Verfahren zum Herstellen einer Bürste, insbesondere einer filigranen Bürste wie einer Kosmetikbürste, einer Mascarabürste oder einer Interdentalbürste.

Eine solche Bürste weist einen Borsteneinsatz auf, dessen tragende Struktur aus zwei Drahtabschnitten besteht, die miteinander verdrillt sind. Auf einem Teil der Länge der beiden Drahtabschnitte sind eine Vielzahl von Borsten eingeklemmt, sodass ein Borstenabschnitt gebildet ist. Der nicht mit Borsten versehene Teil bildet einen Verankerungsabschnitt, mit dem der Borsteneinsatz am Trägerkörper befestigt werden kann.

Aus der DE 10 2018 127 192 A1 ist bekannt, den Verankerungsabschnitt mittels Ultraschalleinbetten mit einer Verankerungsfläche des Trägerkörpers zu verbinden. Hierfür wird eine Sonotrode verwendet, die in eine Aussparung des Trägerkörpers eingeführt wird und dort auf den Verankerungsabschnitt drückt, sodass dieser durch die zugeführte Energie das Material des Trägerkörpers lokal aufschmilzt und dort eingebettet wird. Gleichzeitig kann der Verankerungsabschnitt so plastisch verformt werden, dass er nicht durch eine Drehbewegung aus der Verankerungsfläche herausgeschraubt werden kann. Damit die Sonotrode am Verankerungsabschnitt angreifen kann, muss der Trägerkörper mit einer ausreichend großen Aussparung versehen sein. Diese wird nachträglich mittels eines Deckels verschlossen, sodass der Bereich, in welchem der Verankerungsabschnitt mit dem Trägerkörper verbunden ist, von außen nicht mehr sichtbar ist.

Die WO 2017 / 167608 A1 offenbart ein Verfahren und eine Vorrichtung zum Herstellen einer Bürste oder eines Pinsels. Zur Herstellung einer Bürste oder eines Pinsels wird ein Träger mit einer Verankerungsöffnung bereitgestellt, in die ein Borstenelement eingesetzt wird. Der Träger wird in einem seitlich an die Verankerungsöffnung angrenzenden Bereich auf eine Temperatur erwärmt, die unterhalb der Schmelztemperatur des Materials des Trägers liegt und mittels eines seitlich angreifenden Presswerkzeugs so verformt, dass der Querschnitt der Verankerungsöffnung verringert wird und das Borstenelement in der Verankerungsöffnung verankert ist.

Die Aufgabe der Erfindung besteht darin, das Verfahren zum Herstellen der Bürste dahingehend zu verbessern, dass sich insgesamt ein geringerer Aufwand ergibt.

Zur Lösung dieser Aufgabe ist erfindungsgemäß ein Verfahren zum Herstellen einer Bürste mit einem Trägerkörper und einem Borsteneinsatz mittels der folgenden Schritte vorgesehen: Zunächst wird ein Trägerkörper mit einer Aufnahmeöffnung bereitgestellt. Dann wird in die Aufnahmeöffnung ein Verankerungsabschnitt eines Borsteneinsatzes eingebracht. Dann wird eine aktivierte Sonotrode so gegen den Trägerkörper gedrückt, dass mindestens ein Stempel der Sonotrode sich durch das Material des Trägerkörpers hindurchdrückt und dann gegen den Verankerungsabschnitt drückt, sodass dieser sich mit dem Material des Trägerkörpers verbindet. Die Erfindung beruht auf der Erkenntnis, dass der Trägerkörper im Ausgangszustand nicht mit einer großen Aussparung versehen sein muss, in die die Sonotrode eingeschoben wird, sondern dass die Sonotrode sich (zumindest teilweise) ihren Zugang zum Verankerungsabschnitt des Borsteneinsatzes selbst erzeugt, um diesem so Energie zuzuführen, dass er mit dem Material des Trägerkörpers verbunden wird. Auf diese Weise wird die Herstellung des Trägerkörpers vereinfacht, da weniger oder gar keine Kerne in einer Spritzgussform erforderlich sind, die zur Herstellung des Trägerkörpers verwendet wird. Weiterhin ergibt sich der Vorteil, dass nachträglich kein Deckel angebracht werden muss, um die Aussparung für die Sonotrode zu verschließen, da lediglich eine oder mehrere kleinere Vertiefungen auf der Außenfläche des Trägerkörpers sichtbar sind, nämlich die, durch die ein Stempel oder mehrere Stempel des Sonotrode in das Material des Trägerkörpers eingedrungen sind. Diese Vertiefungen sind aber optisch nicht weiter störend. Weiterhin gibt es, da die Aufnahmeöffnung nicht seitlich durch eine Aussparung geöffnet ist, die Gewähr dafür, dass der Verankerungsabschnitt sich an einer präzise definierten Position befindet, wenn die Sonotrode aufgedrückt wird.

Es kann vorgesehen sein, dass der Trägerkörper mit einer Vertiefung versehen ist und der Stempel der Sonotrode in diese Vertiefung eingesetzt wird und sich dann durch den Boden der Vertiefung durchdrückt, wodurch ein Kanal geschaffen ist, der sich bis zur Aufnahmeöffnung und damit auch bis zum Verankerungsabschnitt erstreckt. Die Vertiefung verringert die Menge an Material, durch die sich die Sonotrode hindurcharbeiten muss, bevor sie zum Verankerungsabschnitt gelangt. Hierdurch kann die Taktzeit erhöht werden.

Es ist auch möglich, dass der Stempel gegen eine Außenfläche des Trägerkörpers gedrückt wird, sodass er einen Kanal erzeugt, durch den er bis auf den Verankerungsabschnitt gelangt. Bei dieser Ausgestaltung muss, falls der Trägerkörper ein Spritzgussteil ist, kein Kern verwendet werden, um eine Vertiefung herzustellen. Es ist auch nicht nötig, die Vertiefung beispielsweise durch Bohren oder ein anderes Bearbeitungsverfahren herzustellen.

Gemäß einer Ausführungsform ist vorgesehen, dass die Sonotrode mehrere Stempel aufweist, von denen mindestens einer in eine Vertiefung des Trägerkörpers und mindestens einer gegen eine Außenfläche des Trägerkörpers gedrückt wird. Bei dieser Ausgestaltung dient die eine Vertiefung als Führung für die Sonotrode, während die übrigen Stempel sich ihren Weg durch das Material des Trägerkörpers vollständig selbst bahnen müssen.

Die Sonotrode kann mehrere Stempel aufweisen, die unterschiedliche Längen haben. Mit den Stempeln kann der Verankerungsabschnitt beim Einbetten in das Material des Trägerkörpers unterschiedlich verformt werden, sodass ein Formschluss erzeugt wird, der verhindert, dass die verdrillten Drahtabschnitte des Verankerungsabschnittes aus dem Material des Trägerkörpers herausgeschraubt werden.

Es kann vorgesehen sein, dass der Trägerkörper mehr Vertiefungen aufweist als die Sonotrode Stempel aufweist und dass nur ein Teil der Vertiefungen dafür genutzt wird, den Verankerungsabschnitt mit dem Material des Trägerkörpers zu verbinden. Die Vertiefungen können beispielsweise dazu genutzt werden, einen Griffabschnitt zu bilden, der rutschfest ist. Dabei können dann einige der Vertiefungen dazu verwendet werden, den Verankerungsabschnitt mit dem Trägerkörper zu verbinden. Wenn der Durchmesser der Vertiefungen klein gegenüber ihrer Tiefe ist, ist der Verankerungsabschnitt des Borsteneinsatzes im Inneren des Trägerkörpers nicht sichtbar, sodass (jedenfalls auf den ersten Blick) für einen Benutzer kein Unterschied zwischen den verschiedenen Vertiefungen zu sehen ist. Es müssen daher keine weiteren Maßnahmen getroffen werden, um die Zugangsöffnungen für die Sonotrode zu verschließen oder abzudecken.

Vorzugsweise wird der Verankerungsabschnitt des Borsteneinsatzes vom Stempel der Sonotrode lokal verformt, wenn er sich mit dem Material des Trägerkörpers verbindet. Beispielsweise kann eine V- oder U-förmige Ausbuchtung erzeugt werden, die tief in das Material des Trägerkörpers eingedrückt wird. Hierdurch ergibt sich ein Formschluss, mit dem der Verankerungsabschnitt besonders zuverlässig in das Material des Trägerkörpers eingebettet wird.

Es kann auch vorgesehen sein, dass die Sonotrode mehrere Stempel aufweist und der Verankerungsabschnitt insgesamt von den Stempeln verformt wird. Dadurch ist der Verankerungsabschnitt in dem Bereich, in welchem die Stempel an ihm angreifen, gegenüber anderen, benachbarten Abschnitten verformt, insbesondere gegenüber dem Bereich, der auf der Seite zum Borsteneinsatz hin liegt. Auch hierdurch ergibt sich ein Formschluss, mit dem verhindert ist, dass der Borsteneinsatz aus dem Trägerkörper herausgeschraubt werden kann.

Gemäß einer bevorzugten Ausführungsform ist vorgesehen, dass der Verankerungsabschnitt in das Material des Trägerkörpers eingeschmolzen wird. Bei dieser Ausgestaltung wird dem Verankerungsabschnitt so viel Energie zugeführt, dass das Material unterhalb des Verankerungsabschnittes erweicht wird, sodass das Material des Trägerkörpers in die Freiräume der miteinander verdrillten Drahtabschnitte fließt. Dies erhöht die Haltekraft.

Vorzugsweise wir der Verankerungsabschnitt so tief in das Material des Trägerkörpers eingeschmolzen, dass er unterhalb des Niveaus von benachbarten Materialabschnitten des Trägerkörpers liegt. Dies führt meist dazu, dass das Material des Trägerkörpers oberhalb des Verankerungsabschnittes wieder etwas zusammenfließt, sodass der verbleibende Spalt im Material des Trägerkörpers schmäler ist als der maximale Durchmesser des Verankerungsabschnittes. Selbst wenn die Haftkraft überschritten würde, mit der das aufgeschmolzene und wieder erstarrte Material des Trägerkörpers an der Oberfläche des Verankerungsabschnittes klebt, müsste das Material des Trägerkörpers immer noch mechanisch verformt werden, damit der Verankerungsabschnitt vom Trägerkörper gelöst werden könnte.

Gemäß einer bevorzugten Ausführungsform besteht der Trägerkörper aus Kunststoff, insbesondere aus Polypropylen. Dieses Material kann mit einer sehr kurzen Taktzeit in der gewünschten Weise aufgeschmolzen werden, um den Verankerungsabschnitt mit dem Trägerkörper zu verbinden.

Es kann auch vorgesehen sein, dass der Trägerkörper aus einem Naturmaterial besteht, insbesondere aus Holz oder Bambus. Überraschenderweise ergibt sich auch hier eine Verbindung zwischen dem Material des Verankerungsabschnittes und dem Material des Trägerkörpers, die einer Ultraschallschweißung entspricht.

Die Erfindung wird nachfolgend anhand verschiedener Ausführungsformen beschrieben, die in den beigefügten Zeichnungen dargestellt sind. In diesen zeigen:
- Figur 1 in einer schematischen Schnittansicht einen Trägerkörper für eine Bürste;
- Figur 2 einen Borsteneinsatz, der dafür vorgesehen ist, in den Trägerkörper eingesetzt und mit diesem verbunden zu werden, um eine Bürste zu bilden;
- Figur 3 schematisch eine Sonotrode, die beim erfindungsgemäßen Verfahren verwendet werden kann, um den Borstenträger mit dem Trägerkörper zu verbinden;
- Figur 4 schematisch einen ersten und einen zweiten Verfahrensschritt eines erfindungsgemäßen Verfahrens;
- Figur 5 schematisch einen dritten Verfahrensschritt des erfindungsgemäßen Verfahrens;
- Figur 6 den nach den ersten drei Verfahrensschritten verformten Borstenträger;
- Figur 7 in einer schematischen Schnittansicht eine mit dem erfindungsgemäßen Verfahren hergestellte Bürste;
- die Figuren 8a-8d verschiedene Schritte eines erfindungsgemäßen Verfahrens, bei dem die Sonotrode von Figur 3 verwendet wird; und
- die Figuren 9a-9d verschiedene Ausführungsbeispiele von Bürsten, die mit dem erfindungsgemäßen Verfahren hergestellt sind.

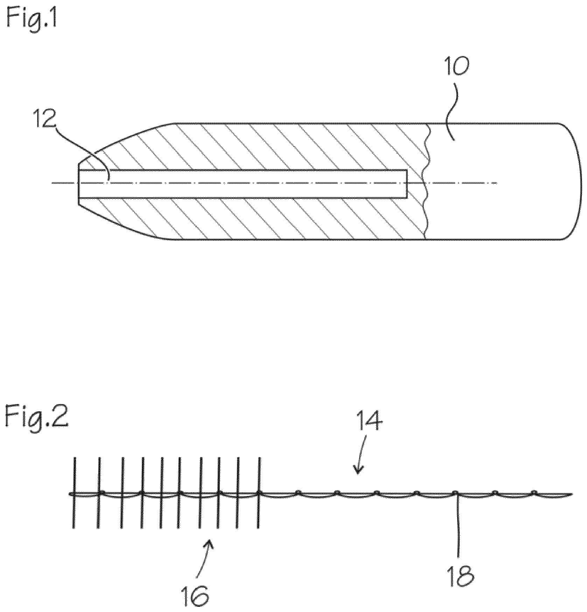

In Figur 1 ist ein Trägerkörper 10 für eine Bürste gezeigt, der allgemein langgestreckt ausgeführt ist und an einem Ende eine Aufnahmeöffnung 12 aufweist, in der ein Borsteneinsatz (siehe Figur 2) angebracht werden kann.

Die Aufnahmeöffnung 12 erstreckt sich hier gerade und ist als Sackloch ausgeführt. Es sind keine seitlichen Zutrittsöffnungen vorgesehen.

Der Trägerkörper 10 besteht vorzugsweise aus Kunststoff, insbesondere aus Polypropylen. Es ist grundsätzlich auch möglich, den Trägerkörper 10 aus einem Naturmaterial wie Holz oder Bambus auszuführen.

Die Aufnahmeöffnung 12 kann bei der Herstellung des Trägerkörpers 10 abgeformt werden, wenn dieses ein Gussteil ist. Alternativ ist auch möglich, die Aufnahmeöffnung 12 zu bohren.

Der in Figur 2 gezeigte Borsteneinsatz 14 besteht aus einem Drahtstück, das in der Mitte umgebogen ist, sodass zwei gleichlange Abschnitte erhalten sind. Diese werden miteinander verdrillt. Dabei werden in einem Bereich eine Vielzahl von Borsten zwischen den beiden miteinander verdrillten Drahtabschnitten eingebracht, sodass die Borsten zwischen den Drahtabschnitten eingeklemmt werden. Hierdurch ist ein Borstenabschnitt 16 gebildet. Außerhalb des Borstenabschnitts 16 sind die verdrillten Drahtabschnitte frei von Borsten. Ein Teil der borstenfreien Drahtabschnitte dient zur Befestigung oder Verankerung des Borsteneinsatzes 14 in der Aufnahmeöffnung 12 im Trägerkörper 10. Dementsprechend wird dieser Abschnitt als Verankerungsabschnitt 18 bezeichnet.

Der Borsteneinsatz 14 kann auch durch zwei separate Drahtstücke gebildet sein, die miteinander verdrillt sind.

Wenn der Borsteneinsatz 14 im Trägerkörper 10 befestigt ist, stellt die so gebildete Bürste insbesondere ein filigranes Bürstchen wie eine Kosmetikbürste, eine Mascarabürste oder eine Interdentalbürste dar.

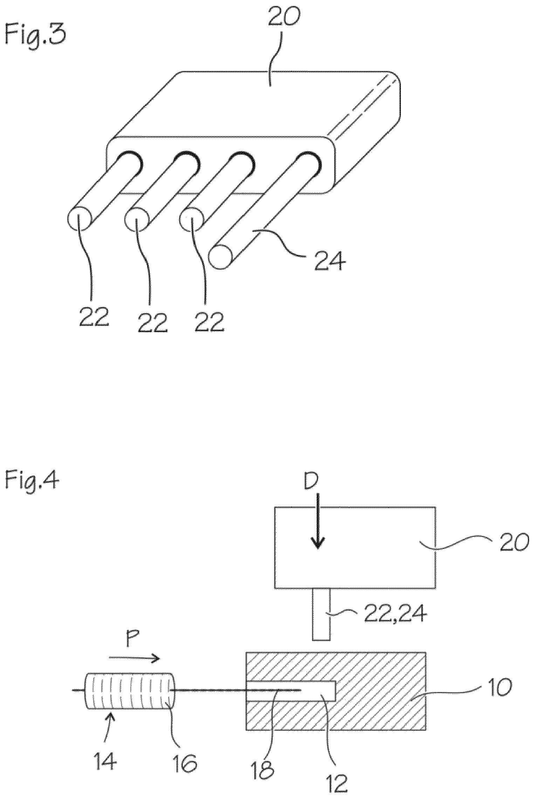

In Figur 3 ist schematisch eine Sonotrode 20 gezeigt, also ein Werkzeug, das dazu dient, hochfrequente mechanische Schwingungen, die von einem Ultraschallgenerator erzeugt werden, in ein Werkstück einzuleiten. Der Ultraschallgenerator ist hier nicht gezeigt. Das Werkstück, in das die Schwingungen eingeleitet werden sollen, ist der Verankerungsabschnitt 18 des Borsteneinsatzes 14.

Die Sonotrode 20 weist beim in Figur 3 gezeigten Ausführungsbeispiel mehrere Stempel 22, 24 auf, wobei hier drei Stempel 22 mit derselben Länge und ein vierter Stempel 24 vorgesehen sind, dessen Länge größer als die Länge der Stempel 22 ist.

Allgemein ausgedrückt dient die Sonotrode dazu, den Verankerungsabschnitt 18 des Borsteneinsatzes 14 mit dem Material des Trägerkörpers 10 zu verschweißen. Durch die in den Verankerungsabschnitt eingeleitete Energie und den aufgebrachten mechanischen Druck wird das Material des Trägerkörpers lokal erweicht oder aufgeschmolzen, sodass der Verankerungsabschnitt 18, wenn das Material wieder abgekühlt ist, fest mit dem Trägerkörper 10 verbunden ist.

Eine Besonderheit des Verfahrens besteht darin, dass der Trägerkörper nicht mit seitlichen Zugangsöffnungen zur Aufnahmeöffnung 12 versehen ist, sondern sich der Stempel der Sonotrode, wenn diese seitlich auf den Trägerkörper aufgesetzt wird, sich seinen Weg von der Außenseite des Trägerkörpers hin bis zur Aufnahmeöffnung 12 selbst schafft, wo er dann auf den Verankerungsabschnitt 18 trifft, diesen gegen die Wand der Aufnahmeöffnung 12 drückt und den Verankerungsabschnitt 18 mit dem Material des Trägerkörpers verbindet.

In Figur 4 sind schematisch ein erster und ein zweiter Schritt des erfindungsgemäßen Verfahrens gezeigt.

In einem ersten Schritt wird ein Borsteneinsatz 14 in eine Aufnahmeöffnung 12 eines bereitgestellten Trägerkörpers 10 eingeschoben (siehe den Pfeil P).

Dann wird eine aktivierte Sonotrode an einer geeigneten Stelle so gegen die Außenwand des Trägerkörpers 10 gedrückt (siehe den Pfeil D), dass sich ein Stempel 22, 24 durch das Material des Trägerkörpers 10 hindurcharbeitet, bis die Sonotrode die Aufnahmeöffnung 12 erreicht und dort auf den Verankerungsabschnitt 18 drückt. Dieser wird dann durch die eingeleiteten Ultraschallschwingungen fest gegen eine Seite der Aufnahmeöffnung 12 gedrückt und dort mit dem Material des Trägerkörpers 10 fest verbunden.

Wenn der Trägerkörper 10 aus Kunstsoff besteht, schmilzt sich die Sonotrode 20 (genauer gesagt: ihr Stempel oder ihre Stempel) durch die Wand des Trägerkörpers hindurch, bis sie auf den Verankerungsabschnitt 18 trifft. Dieser wird dann in das Material des Trägerkörpers eingeschmolzen. Abhängig von der Menge der eingebrachten Energie kann dabei der Verankerungsabschnitt 18 unterschiedlich tief in die Wand der Aufnahmeöffnung 12 eingebettet werden. Wird die Sonotrode 20 lang genug gegen den Verankerungsabschnitt 18 gedrückt, ist dieser so tief im Material des Trägerkörpers 10 eingebettet, dass er unterhalb des Niveaus von benachbarten Wandungsbereichen liegt.

Es ist auch denkbar, dass der Trägerkörper 10 aus einem Naturmaterial wie Holz oder Bambus besteht. Wenn der Querschnitt des Stempels 22, 24 klein genug ist, kann er sich auch bei diesem Material durch den Trägerkörper hindurcharbeiten, bis er auf den Verankerungsabschnitt 18 trifft. Es hat sich gezeigt, dass sich ein Verankerungsabschnitt 18 aus Metall durch aufgebrachte Ultraschallschwingungen auch mit Holz oder Bambus verbindet. Auch wenn das Material des Trägerkörpers in diesem Falle nicht aufgeschmolzen wird, ergibt sich eine hohe Haltekraft, die vergleichbar mit dem Einbetten in einen Kunststoffkörper ist.

Während der Stempel 22, 24 den Verankerungsabschnitt 18 gegen die Wand der Aufnahmeöffnung 12 drückt, wird der Verankerungsabschnitt 18 vom Stempel lokal verformt, sodass über die stoffschlüssige Verbindung zwischen dem Verankerungsabschnitt 18 und dem Material des Trägerkörpers 10 hinaus ein Formschluss gebildet ist. Dieser Formschluss dient insbesondere dazu, ein Drehmoment aufzunehmen, das zwischen dem Trägerkörper 10 und dem Borsteneinsatz 14 wirkt. Hierdurch ist zuverlässig verhindert, dass der Verankerungsabschnitt 18, der aus verdrillten Drahtabschnitten besteht, aus dem Trägerkörper 10 herausgeschraubt werden kann.

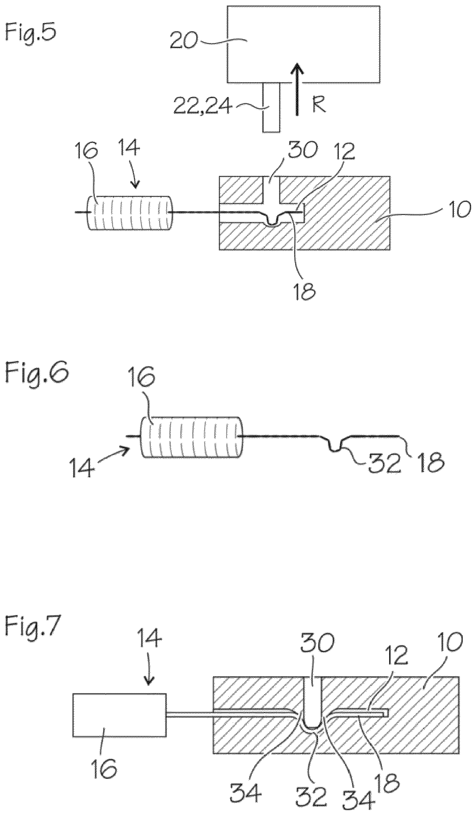

In Figur 5 ist als dritter Verfahrensschritt zu sehen, dass die Sonotrode 20 vom Trägerkörper 10 entfernt wird (siehe den Pfeil R). Zurück bleibt ein vom Stempel 22, 24 erzeugter Kanal 30, der zu der Stelle führt, an der der Verankerungsabschnitt 18 vom Stempel 22, 24 plastisch verformt und in das Material des Trägerkörpers eingedrückt ist. Die plastisch verformte Stelle 32 am Verankerungsabschnitt 18 ist in Figur 6 zu sehen.

In Figur 7 ist in vergrößertem Maßstab der im Trägerkörper 10 verankerte Borsteneinsatz 14 gezeigt, wobei der Trägerkörper 10 geschnitten dargestellt ist. Es ist zu sehen, dass der Verankerungsabschnitt 18 insbesondere im Bereich der plastisch verformten Stelle 32 in das Material des Trägerkörpers 10 eingedrückt und dort verankert ist. Weiterhin ist zu sehen, dass der Stempel 22, 24 beim Eintritt in die Aufnahmeöffnung 12 einen Teil des Materials des Trägerkörpers in die Aufnahmeöffnung 12 hinein verdrängt hat (siehe die Abschnitte 34). Diese Materialabschnitte tragen dazu bei, den Verankerungsabschnitt 18 zuverlässig im Trägerkörper 10 zu verankern, da sie verhindern, dass sich der Verankerungsabschnitt (bezogen auf die Darstellung in Figur 7) nach oben von seinem "Bett" löst.

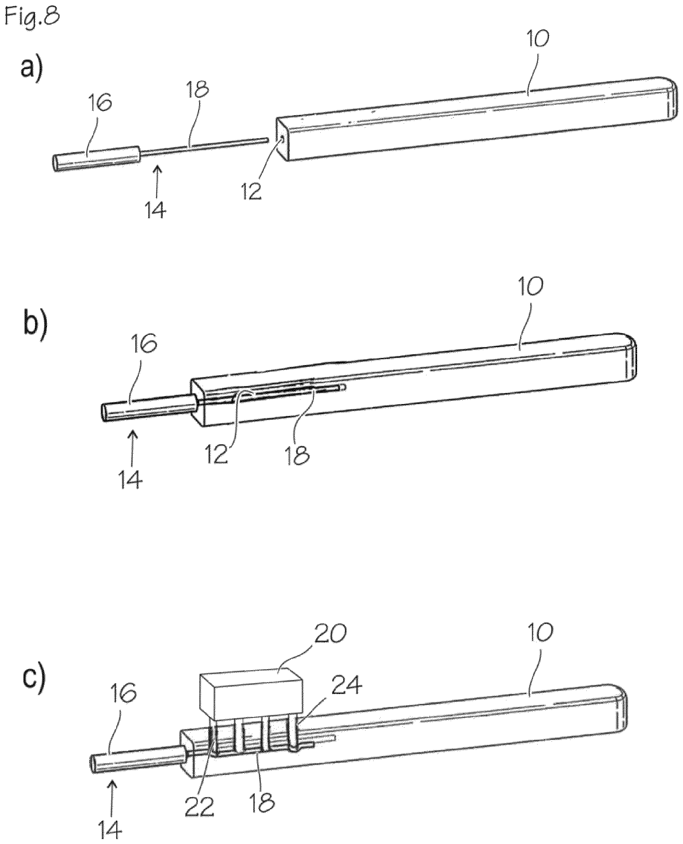

In den Figuren 8a-8d ist eine Ausführungsform des Verfahrens gezeigt, bei dem die in Figur 3 gezeigte Sonotrode mit drei kürzeren Stempeln 22 und einem längeren Stempel 24 verwendet wird.

Im ersten Schritt (siehe Figur 8a) wird der Borsteneinsatz 14 in die Aufnahmeöffnung 12 des Trägerkörpers 10 eingeschoben, bis sie dort aufgenommen ist (siehe Figur 8b). Es ist in Figur 8b zu sehen, dass der Trägerkörper 10 im Ausgangszustand keine Kanäle für die Stempel 22, 24 aufweist.

In Figur 8c ist die Sonotrode 20 in einem Zustand zu sehen, in welchem sie bereits so weit gegen den Trägerkörper 10 gedrückt wurde, dass die Stempel 22, 24 sich ihren Weg durch das Material des Trägerkörpers 10 geschaffen haben und auf den Verankerungsabschnitt 18 drücken. Dieser wird dadurch fest mit dem Material des Trägerkörpers 10 verbunden.

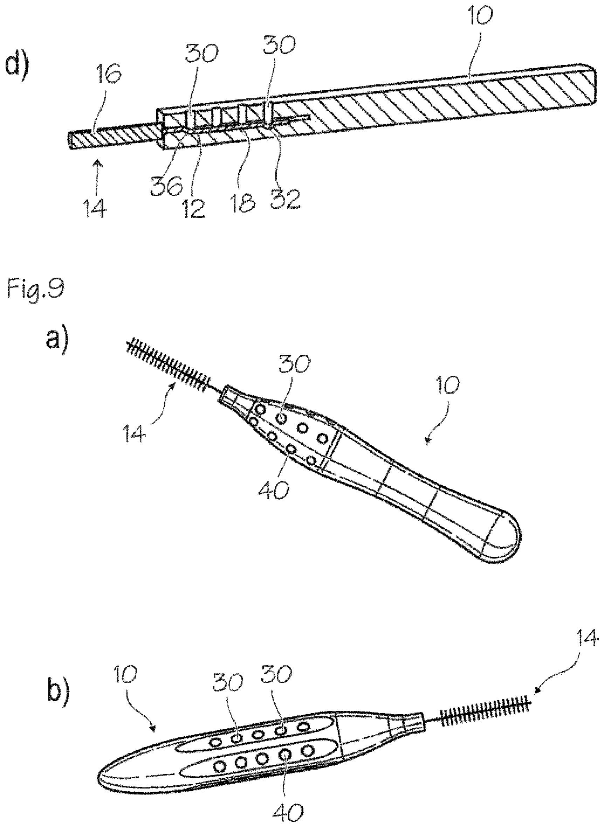

In Figur 8d ist der Trägerkörper 10 geschnitten gezeigt, sodass der Verankerungsabschnitt 18 in dem Zustand gezeigt ist, in dem er fest mit dem Material des Trägerkörpers 10 verbunden ist.

Es ist zu sehen, dass der Verankerungsabschnitt 18 in zweifacher Hinsicht verformt ist. Zum einen ist er insgesamt gegenüber seinem Ausgangszustand versetzt (siehe den Bereich 36), da die drei kürzeren Stempel 22 den Verankerungsabschnitt 18 insgesamt gegenüber dem Bereich, der im vorderen Abschnitt der Aufnahmeöffnung 12 geführt ist, seitlich verformt haben. Zusätzlich ist die Stelle 32 zu sehen, an der der Verankerungsabschnitt 18 durch den längeren Stempel 24 lokal plastisch verformt ist und dort besonders tief in das Material des Trägerkörpers 10 eingedrückt ist.

In den Figuren 9a-9d sind verschiedene Ausführungsformen von Bürsten gezeigt, die mit dem erfindungsgemäßen Verfahren hergestellt sind. Es handelt sich hier um Kosmetikbürstchen, Interdentalbürstchen oder Mascarabürstchen.

Allen gezeigten Ausführungsbeispielen ist gemeinsam, dass die Bürste, wenn der Borsteneinsatz 14 am Trägerkörper verankert ist, als Folge des verwendeten Herstellungsverfahrens mindestens einen Kanal 30 aufweist, den ein Stempel der Sonotrode erzeugt hat und der bis hinein in die Aufnahmeöffnung 12 reicht. Zusätzlich sind mehrere Vertiefungen 40 vorgesehen, die entweder rein dekorativen Charakter haben (insbesondere um davon abzulenken, dass die Sonotrode mit den Stempeln 22, 24 einen Kanal in den Trägerkörper 10 eingedrückt hat) oder dazu dienen, die Haptik und/oder die Griffsicherheit zu verbessern.

Im Ausführungsbeispiel von Figur 9a sind die Kanäle 30 und die Vertiefungen 40 auf einem vorderen, sich konisch verjüngenden Abschnitt des Trägerkörpers 10 angeordnet.

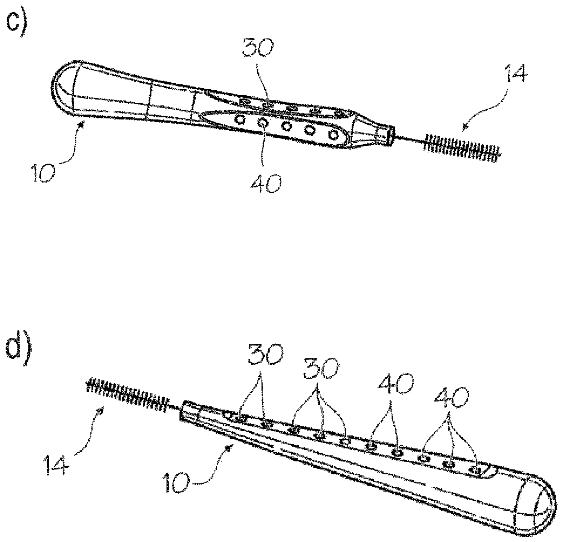

In den Ausführungsbeispielen der Figuren 9b und 9c sind die Kanäle 30 und die Vertiefungen 40 auf eingezogenen, facettenartigen Abschnitten des Trägerkörpers 10 angeordnet.

Bei der Ausführungsform von Figur 9d sind die Kanäle 30 und die Vertiefungen 40 in einer Reihe auf lediglich einer Seite des Trägerkörpers angeordnet.

Es kann vorgesehen sein, dass der Trägerkörper 10 im Ausgangszustand die vorgesehenen Vertiefungen 40 aufweist und die Kanäle 30 allein dadurch erzeugt werden, dass die Sonotrode bzw. ihre Stempel gegen die dort glatte Oberfläche des Trägerkörpers 10 gedrückt wird. Alternativ ist möglich, dass der Trägerkörper 10 bereits dort mit Vertiefungen 40 versehen ist, wo die Stempel 22, 24 der Sonotrode in den Trägerkörper 10 eingedrückt werden sollen. In diesem Fall dienen die Vertiefungen 40 als Führung für die Sonotrode, und das Material des Trägerkörpers 10, das verdrängt wird, wenn die Stempel 22, 24 sich ihren Weg durch den Trägerkörper hin zur Aufnahmeöffnung 12 bahnen, wird nicht auf der Außenfläche des Trägerkörpers 10 aufgeworfen, sondern etwas tiefer innerhalb der Vertiefung 40. Dies kann unter optischen Gesichtspunkten vorteilhaft sein.

## Patentansprüche

1. Verfahren zum Herstellen einer Bürste mit einem Trägerkörper (10) und einem Borsteneinsatz (14) mittels der folgenden Schritte:
- es wird ein Trägerkörper (10) mit einer Aufnahmeöffnung (12) bereitgestellt;
- in die Aufnahmeöffnung (12) wird ein Verankerungsabschnitt (18) eines Borsteneinsatzes (14) eingebracht;
- es wird eine aktivierte Sonotrode (20) so gegen den Trägerkörper (10) gedrückt, dass mindestens ein Stempel (22, 24) der Sonotrode (20) sich durch das Material des Trägerkörpers (10) hindurchdrückt und dann gegen den Verankerungsabschnitt (18) drückt, so dass dieser sich mit dem Material des Trägerkörpers (10) verbindet.

2. Verfahren nach Anspruch 1, **dadurch gekennzeichnet, dass** der Stempel (22, 24) in eine Vertiefung (40) des Trägerkörpers (10) eingesetzt wird und sich dann durch den Boden der Vertiefung (40) durchdrückt.

3. Verfahren nach Anspruch 1, **dadurch gekennzeichnet, dass** der Stempel (22, 24) gegen eine Außenfläche des Trägerkörpers (10) gedrückt wird, so dass der Stempel (22, 24) einen Kanal (30) erzeugt, durch die er bis auf den Verankerungsabschnitt (18) gelangt.

4. Verfahren nach einem der vorhergehenden Ansprüche, **dadurch gekennzeichnet, dass** die Sonotrode (20) mehrere Stempel (22, 24) aufweist, von denen mindestens einer in eine Vertiefung (40) des Trägerkörpers (10) und mindestens einer gegen eine Außenfläche des Trägerkörpers (10) gedrückt wird.

5. Verfahren nach einem der vorhergehenden Ansprüche, **dadurch gekennzeichnet, dass** die Sonotrode (20) mehrere Stempel (22, 24) aufweist, die unterschiedliche Längen haben.

6. Verfahren nach einem der vorhergehenden Ansprüche, **dadurch gekennzeichnet, dass** der Trägerkörper (10) mehr Vertiefungen (40) aufweist als die Sonotrode (20) Stempel (22, 24) aufweist und dass nur ein Teil der Vertiefungen (40) dafür genutzt wird, den Verankerungsabschnitt (18) mit dem Material des Trägerkörpers (10) zu verbinden.

7. Verfahren nach einem der vorhergehenden Ansprüche, **dadurch gekennzeichnet, dass** der Verankerungsabschnitt (18) vom Stempel (22, 24) der Sonotrode (20) lokal verformt wird, wenn er sich mit dem Material des Trägerkörpers (10) verbindet.

8. Verfahren nach einem der vorhergehenden Ansprüche, **dadurch gekennzeichnet, dass** die Sonotrode (20) mehrere Stempel (22, 24) aufweist und der Verankerungsabschnitt (18) insgesamt von den Stempeln (22, 24) verformt wird.

9. Verfahren nach einem der vorhergehenden Ansprüche, dass der Verankerungsabschnitt (18) in das Material des Trägerkörpers (10) eingeschmolzen wird.

10. Verfahren nach Anspruch 9, **dadurch gekennzeichnet, dass** der Verankerungsabschnitt (18) so tief in das Material des Trägerkörpers (10) eingeschmolzen wird, dass er unterhalb des Niveaus von benachbarten Materialabschnitten des Trägerkörpers (10) liegt.

11. Verfahren nach einem der vorhergehenden Ansprüche, dass der Trägerkörper (10) aus Kunststoff besteht.

12. Verfahren nach einem der Ansprüche 1 bis 10, dass der Trägerkörper (10) aus einem Naturmaterial besteht, insbesondere aus Holz oder Bambus.

## Claims

1. A method of manufacturing a brush comprising a carrier body (10) and a bristle insert (14), by means of the following steps:
- providing a carrier body (10) having a receiving opening (12);
- introducing an anchoring section (18) of a bristle insert (14) into the receiving opening (12);
- pressing an activated sonotrode (20) against the carrier body (10) such that at least one punch (22, 24) of the sonotrode (20) presses itself through the material of the carrier body (10) and then presses against the anchoring section (18) so that the latter combines with the material of the carrier body (10).

2. The method according to claim 1, **characterized in that** the punch (22, 24) is inserted into a depression (40) of the carrier body (10) and then presses itself through the bottom of the depression (40).

3. The method according to claim 1, **characterized in that** the punch (22, 24) is pressed against an outer surface of the carrier body (10), so that the punch (22, 24) produces a channel (30) through which it moves as far as the anchoring section (18).

4. The method according to any of the preceding claims, **characterized in that** the sonotrode (20) includes a plurality of punches (22, 24), at least one of which is pressed into a depression (40) of the carrier body (10) and at least one of which is pressed against an outer surface of the carrier body (10).

5. The method according to any of the preceding claims, **characterized in that** the sonotrode (20) includes a plurality of punches (22, 24) having different lengths.

6. The method according to any of the preceding claims, **characterized in that** the carrier body (10) includes more depressions (40) than the sonotrode (20) includes punches (22, 24), and **in that** only part of the depressions (40) is used to connect the anchoring section (18) with the material of the carrier body (10).

7. The method according to any of the preceding claims, **characterized in that** the anchoring section (18) is locally deformed by the punch (22, 24) of the sonotrode (20) when it combines with the material of the carrier body (10).

8. The method according to any of the preceding claims, **characterized in that** the sonotrode (20) includes a plurality of punches (22, 24) and the anchoring section (18) is deformed as a whole by the punches (22, 24).

9. The method according to any of the preceding claims, **characterized in that** the anchoring section (18) is fused into the material of the carrier body (10).

10. The method according to claim 9, **characterized in that** the anchoring section (18) is fused into the material of the carrier body (10) to such a depth that it is located below the level of neighboring material sections of the carrier body (10).

11. The method according to any of the preceding claims, **characterized in that** the carrier body (10) consists of a plastic material.

12. The method according to any of claims 1 to 10, **characterized in that** the carrier body (10) consists of a natural material, in particular of wood or bamboo.

## Revendications

1. Procédé de fabrication d'une brosse comprenant un corps de support (10) et un insert de poils (14) au moyen des étapes suivantes :
- fournir un corps de support (10) qui présente une ouverture de réception (12) ;
- insérer un tronçon d'ancrage (18) d'un insert de poils (14) dans l'ouverture de réception (12) ;
- pousser une sonotrode (20) activée contre le corps de support (10) de sorte qu'au moins un poinçon (22, 24) de la sonotrode (20) se pousse à travers la matière du corps de support (10) et pousse ensuite contre le tronçon d'ancrage (18) de sorte que ce dernier se lie à la matière du corps de support (10).

2. Procédé selon la revendication 1, **caractérisé en ce que** le poinçon (22, 24) est inséré dans un évidement (40) du corps de support (10) et se pousse à travers le fond de l'évidement (40).

3. Procédé selon la revendication 1, **caractérisé en ce que** le poinçon (22, 24) est poussé contre une face extérieure du corps de support (10) de sorte que le poinçon (22, 24) produit un canal (30) à travers lequel il parvient au tronçon d'ancrage (18).

4. Procédé selon l'une des revendications précédentes, **caractérisé en ce que** la sonotrode (20) présente une pluralité de poinçons (22, 24) parmi lesquels au moins un est poussé dans un évidement (40) du corps de support (10) et au moins un est poussé contre une face extérieure du corps de support (10).

5. Procédé selon l'une des revendications précédentes, **caractérisé en ce que** la sonotrode (20) présente une pluralité de poinçons (22, 24) qui ont différentes longueurs.

6. Procédé selon l'une des revendications précédentes, **caractérisé en ce que** le corps de support (10) présente plus d'évidements (40) que la sonotrode (20) présente de poinçons (22, 24), et **en ce que** seulement une partie des évidements (40) est utilisée pour lier le tronçon d'ancrage (18) à la matière du corps de support (10).

7. Procédé selon l'une des revendications précédentes, **caractérisé en ce que** le tronçon d'ancrage (18) est déformé localement par le poinçon (22, 24) de la sonotrode (20) lorsqu'il se lie à la matière du corps de support (10).

8. Procédé selon l'une des revendications précédentes, **caractérisé en ce que** la sonotrode (20) présente une pluralité de poinçons (22, 24) et le tronçon d'ancrage (18) est déformé dans l'ensemble par les poinçons (22, 24).

9. Procédé selon l'une des revendications précédentes, **caractérisé en ce que** le tronçon d'ancrage (18) est fondu dans la matière du corps de support (10).

10. Procédé selon la revendication 9, **caractérisé en ce que** le tronçon d'ancrage (18) est fondu dans la matière du corps de support (10) avec une telle profondeur qu'il se trouve au-dessous du niveau de tronçons de matière adjacents du corps de support (10).

11. Procédé selon l'une des revendications précédentes, **caractérisé en ce que** le corps de support (10) est réalisé en matière plastique.

12. Procédé selon l'une des revendications 1 à 10, **caractérisé en ce que** le corps de support (10) est réalisé en matière naturelle, en particulier en bois ou en bambou.
